Europäisches Patentamt

European Patent Office

Office européen des brevets

(11) Veröffentlichungsnummer: **0 458 015 A1**

## (12) EUROPÄISCHE PATENTANMELDUNG

(21) Anmeldenummer: 91102137.6

(22) Anmeldetag: 15.02.91

(51) Int. Cl.5: **B01D 17/04**, C10M 175/00

(30) Priorität: 24.05.90 DE 4016718

(43) Veröffentlichungstag der Anmeldung:
27.11.91 Patentblatt 91/48

(84) Benannte Vertragsstaaten:
**AT BE CH DE ES FR GB IT LI NL SE**

(71) Anmelder: **WINKELHORST TRENNTECHNIK GMBH**
**Kelvinstrasse 8**
**W-5000 Köln 50(DE)**

(72) Erfinder: **Winkelhorst, Stephan**
**Zum Landhaus 18**
**W-5000 Köln 50(DE)**
Erfinder: **Winkelhorst, Markus**
**Zum Landhaus 18**
**W-50/0 Köln 50(DE)**

(74) Vertreter: **Selting, Günther, Dipl.-Ing. et al**
**Patentanwälte von Kreisler, Selting, Werner**
**Deichmannhaus am Hauptbahnhof**
**W-5000 Köln 1(DE)**

(54) **Verfahren zur Behandlung von mit Fremdöl verunreinigten Kühlschmierstoffemulsionen.**

(57) Eine Kühl-Schmierstoffemulsion, die mit Fremdöl verunreinigt ist, wird einer Ultraschallbehandlung unterzogen, wodurch die Fremdöltropfen schneller miteinander koalisieren und aufsteigen, so daß eine beschleunigte Dichtetrennung vorgenommen werden kann. Durch Ultraschallbehandlung erfolgt auch eine Keimabtötung. Durch Ultraschallbehandlung kann die Standzeit der Emulsion verlängert werden.

FIG.1

Die Erfindung betrifft ein Verfahren der im Oberbegriff des Patentanspruchs 1 angegebenen Art.

Bei Werkzeugmaschinen werden zum Kühlen und Schmieren von Werkstücken und Werkzeugen Kühl-Schmierstoffemulsionen benutzt, die während des Arbeitsprozesses auf die Bearbeitungsstelle geleitet werden. Derartige Kühl-Schmierstoffemulsionen bestehen aus einem Gemisch aus Wasser und darin fein verteilten Schmierstofftröpfchen. Damit der Schmierstoff in feiner Verteilung im Wasser erhalten bleibt, wird in der Regel ein Emulgator zugesetzt, der verhindert, daß die Schmierstofftröpfchen sich vereinigen und aufsteigen. Kühl-Schmierstoffemulsionen werden normalerweise in einem geschlossenen Kreislauf eingesetzt, wobei nach der Wärmeaufnahme eine Rückkühlung erfolgt. Die Standzeit einer Kühl-Schmierstoffemulsion kann mehrere Monate betragen. Sie wird dadurch begrenzt, daß die Emulsion bei ihrem Kontakt mit dem Werkstück und Teilen der Werkzeugmaschine mit Fremdöl, z.B. aus der Hydraulik der Maschine, in Berührung kommt und dieses Fremdöl aufnimmt. Das Fremdöl verschlechtert die technischen Eigenschaften der Kühl-Schmierstoffemulsion und es trägt Bakterien in diese ein.

Es ist bekannt, aus Kühl-schmierstoffemulsionen das Fremdöl durch Dichtescheidung zu entfernen. Hierzu werden beispielsweise Ringkammerabscheider benutzt, in denen sich die Emulsion als schwere Phase absetzt, während das Fremdöl aufschwimmt und abgeführt werden kann. Eine solche Dichtetrennung erfordert wegen der geringen Dichteunterschiede zwischen Emulsion und Fremdöl einen relativ hohen gerätetechnischen und zeitlichen Aufwand. Zwar kann ein hoher Anteil des Fremdöls aus der Emulsion entfernt werden, jedoch verbleiben die durch das Fremdöl in die Emulsion eingetragenen Verunreinigungen, z.B. Bakterien, zu einem großen Anteil in der Emulsion, so daß diese nach einer gewissen Zeit erneuert werden muß. Andererseits ist die Entsorgung solcher Emulsionen ebenfalls sehr aufwendig. Es besteht daher der Wunsch, die Standzeiten von Kühl-Schmierstoffemulsionen noch weiter zu verlängern.

Aus Patent Abstracts of Japan C-565, 3. Februar 1989, Vol. 13, No. 49 (JP-A-63-245494) ist es bekannt, eine Schmierstoffemulsion in einem Sterilisationsgefäß durch Ultraschallbehandlung zu sterilisieren. Die Ultraschallbehandlung erfolgt durch einen an der Seitenwand des Behälters befestigten Ultraschallgenerator. Dieses Verfahren dient ausschließlich der Keimabtötung und nicht der Ölabscheidung.

Aus Chem-Abstr. 98 (1983) 21738k ist bekannt, daß ein Schallvibrationsfeld die Trennung einer Öl-Wasser-Emulsion begünstigt und beschleunigt.

Der Erfindung liegt die Aufgabe zugrunde, ein Verfahren anzugeben, mit dem eine schnelle und effektive Entölung der Kühl-Schmierstoffemulsion ermöglicht wird und gleichzeitig deren Einsatzzeit verlängert werden kann, um derartige Emulsionen langfristiger benutzen zu können und damit den Entsorgungsaufwand zu verringern.

Die Lösung dieser Aufgabe erfolgt erfindungsgemäß mit dem im Patentanspruch 1 angegebenen Merkmalen. Nach der Erfindung wird die Emulsion zunächst einer Schall- oder Ultraschallbehandlung ausgesetzt. Es hat sich ergeben, daß eine solche Behandlung zwei wesentliche Effekte zur Folge hat, nämlich einerseits eine Beschleunigung der Trennung zwischen Emulsion und Fremdöl und andererseits die Abtötung von Bakterien. Bei Schallwellenbehandlung vereinigen sich die in der Emulsion enthaltenen Fremdöltropfen schneller zu größeren Einheiten. Gleichzeitig wird jedoch bei der Schallwellenbehandlung die Emulsion in regellose ungeordnete Bewegungen versetzt, wobei ein geordnetes Aufsteigen der Öltröpfchen behindert wird. Daher erfolgt unmittelbar im Anschluß an die Schallwellenbehandlung eine Beruhigungsphase, in der der Schallwellengenerator entweder abgeschaltet wird oder in der die Flüssigkeit eine Beruhigungsstrecke des Behälters durchströmt, in der kein Ultraschallgenerator vorhanden ist. Es hat sich herausgestellt, daß während der an die schallwellenbehandlung anschließenden Beruhigung noch ein erheblicher Teil des Öles aufsteigt und abgeschöpft oder über einen Überlauf entfernt werden kann. Vorteilhafterweise erfolgt in der Beruhigungsstrecke noch eine Beheizung der Emulsion, um das geordnete Aufsteigen des Öles zu beschleunigen. Die Ultraschallbehandlung mit anschließender Möglichkeit zur Beruhigung des Mediums durch Durchlaufen einer Beruhigungszone kann somit benutzt werden, um bei einem Ölabscheider die Verweilzeit zu verringern und den Vorgang der Fremdölabscheidung zu verkürzen. Gleichzeitig erfolgt durch die Ultraschallbehandlung eine Abtötung der in dem Flüssigkeitsgemisch enthaltenen Bakterien.

Bei der Schall- oder Ultraschallbehandlung wird ein Koalisierungseffekt der in der Emulsion enthaltenen Fremdöltröpfchen erreicht, die zusammenfließen, sich miteinander vereinigen und anschließend aufsteigen, jedoch wird die Schmierstoffemulsion selbst nicht zerstört. Dies liegt daran, daß die Schmierstofftröpfchen in der Emulsion infolge der Wirkung des Emulgators viel kleiner sind als die Fremdöltröpfchen und somit eine so geringe Koaleszenzneigung haben, daß sie von der Ultraschallbehandlung nicht zum Koalisieren veranlaßt werden können.

Das erfindungsgemäße Verfahren ist auch zum Abtrennen von Fremdöl aus Entfettungsflüssigkeiten anwendbar. Solche Entfettungsflüssigkeiten werden zur Oberflächenvorbehandlung von Werkstücken, beispielsweise vor dem Galvanisieren, benutzt, um die Werkstückoberfläche von Fetten und anderen Fremdstoffen zu reinigen. Entfettungsbäder nehmen dabei Fremdöl auf. Auch beim Entölen solcher Entfettungsbäder kann die Dichtetrennung durch Ultraschallanwendung beschleunigt werden.

Zur Erzielung der Koaleszenzwirkung sollte die Ultraschallenergie mit einer Energiedichte von mindestens etwa 500 W bei ca. 25 KHz zugeführt werden. Die Zuführung der Ultraschallenergie kann dadurch erfolgen, daß eine Wand oder der Boden des Behälters durch eine Ultraschallquelle in Schwingungen versetzt wird, oder dadurch, daß eine Ultraschallquelle in die im Behälter befindliche Flüssigkeit eingetaucht wird.

Im folgenden werden unter Bezugnahme auf die Zeichnungen Ausführungsbeispiele der Erfindung näher erläutert.

Es zeigen:

Fig. 1 eine Stirnansicht eines Ölabscheiders,

Fig. 2 eine Draufsicht des Ölabscheiders,

Fig. 3 einen schematischen Längsschnitt durch den Ölabscheider,

Fig. 4 eine schematische Darstellung einer weiteren Ausführungsform eines Ölabscheiders,

Fig. 5 eine Draufsicht auf die inneren Teile des Ölabscheiders von Fig. 4,

Fig. 6 eine Stirnansicht des Ölabscheiders von Fig. 4 und

Fig. 7 eine Darstellung des Plattenverstellmechanismus des Ölabscheiders der Fign. 4 bis 6.

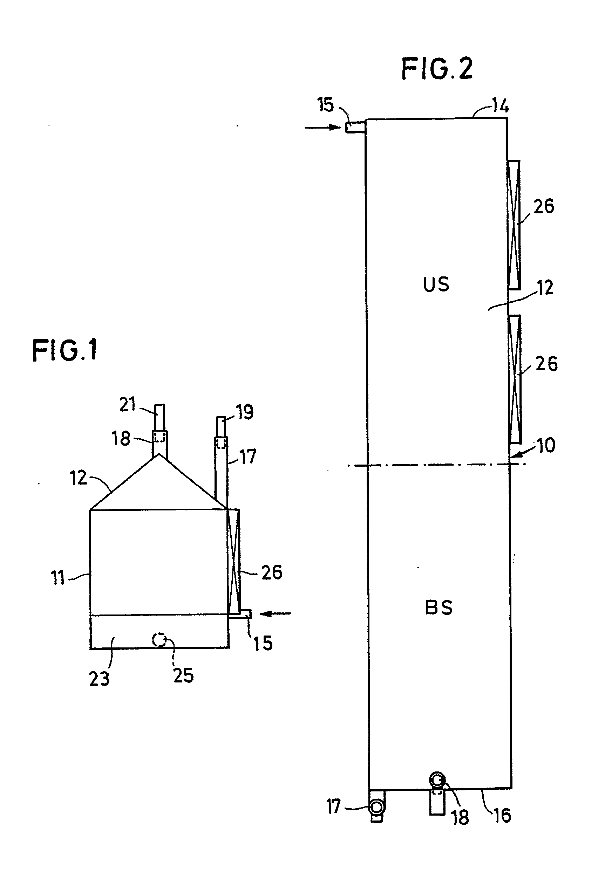

Der Ölabscheider der Fign. 1 bis 3 besteht aus einem langgestreckten Behälter 10 aus einem rechteckigen unteren Behälterteil 11 und einem dachförmigen Aufsatz 12. Der untere Behälterteil 11 und der Aufsatz 12 bilden einen zusammenhängenden Innenraum 13. In der Nähe der einen Stirnwand 14 befindet sich der Einlaß 15, durch den die Emulsion mit dem darin enthaltenen Fremdöl in Bodennähe in den Behälter 10 eingeführt wird. An der entgegengesetzten Stirnwand 16 befinden sich zwei Steigleitungen 17 und 18. Die Steigleitung 17 ist an den unteren Behälterteil angeschlossen und ragt außerhalb des Behälters 10 auf. In ihr steigt die Emulsion auf. In das obere Ende der Steigleitung 17 ist ein Teleskoprohr 19 mit einem seitlichen Auslaß 20 eingesetzt, das vertikal bewegt werden kann, um die effektive Länge der Steigleitung 17 bzw. die Höhe des Auslasses 20 zu verändern.

Die Steigleitung 18 befindet sich am obersten Ende des dachförmigen Aufsatzes 12. Sie ist ebenfalls durch ein Teleskoprohr 21 verlängert, das einen Auslaß 22 aufweist, der durch Verstellung des Teleskoprohrs auf unterschiedliche Höhen eingestellt werden kann. Das Steigrohr 18 dient zur Aufnahme des auf der Emulsion aufschwimmenden Fremdöls, dessen spezifisches Gewicht geringer ist als dasjenige der Emulsion. Dadurch, daß die Auslässe 20 und 22 auf unterschiedliche Höhe eingestellt werden können, kann die Grenzschicht der beiden Phasen Emulsion und Fremdöl im Inneren des Behälters 10 in der Höhe verändert werden.

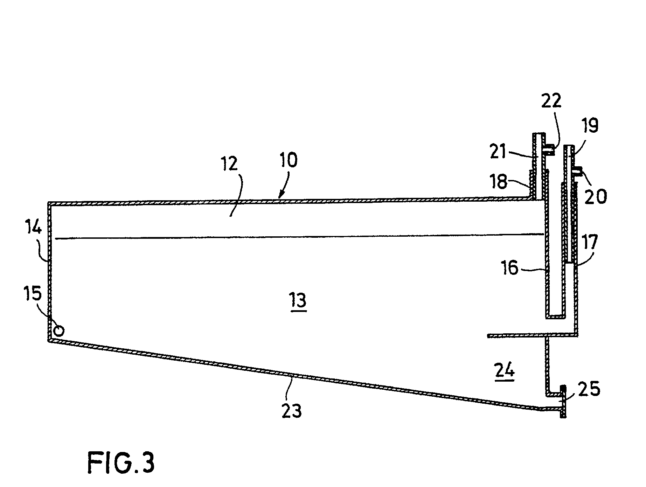

Wie Fig. 3 zeigt, fällt die Bodenwand 23 des Behälters 10 zur auslaßseitigen Stirnwand 16 hin ab, um einen Sumpf 24 für die Aufnahme von Feststoffen und anderen Verunreinigungen hoher Dichte zu bilden. Der Sumpf 24 kann durch die Öffnung 25 entleert werden.

An der einen Seitenwand des Behälters 10 sind in der sich an den Einlaß 15 anschließenden Ultraschallstrecke US Ultraschallquellen 26 befestigt. Die Schwingungen werden von der Ultraschallquelle auf die im Behälter befindliche Flüssigkeit übertragen. Da die Wirkungsdistanz der Ultraschallquellen in Flüssigkeit begrenzt ist, ist der Behälter 10 schmal ausgebildet. Seine Breite beträgt maximal etwa 1000 mm. An die Ultraschallstrecke US schließt sich zum Auslaß hin die Beruhigungsstrecke BS an, die beheizt ist und in der keine Ultraschallbehandlung erfolgt.

Das Emulsions-Fremdöl-Gemisch wird dem Behälter 10 an einem Ende durch den Einlaß 15 durch eine Pumpe zugeführt. Während das Gemisch die Länge des Behälters langsam durchströmt, wird es zunächst von den Ultraschallquellen 26 mit Ultraschallenergie behandelt. Die im Gemisch enthaltenen Fremdöltröpfchen vereinigen sich und steigen vornehmlich in der anschließenden Beruhigungsstrecke BS in den Aufsatz 12 hinein auf, um schließlich in die Steigleitung 18 zu gelangen. Die Emulsion bleibt dagegen im unteren Behälterbereich und steigt schließlich in die Steigleitung 17 auf. Der gesamte Innenraum 13 des Behälters ist mit Flüssigkeit gefüllt. Die Phasengrenzschicht zwischen Emulsion und Fremdöl nimmt eine Höhe ein, die der Höhendifferenz der Auslässe 20 und 22 entspricht.

Durch die Ultraschallbehandlung mit anschließender Beruhigung wird die Dichtetrennung beschleunigt, so daß es möglich ist, diese Dichtetrennung während des Durchströmens des Behälters 10 vorzunehmen. Außerdem werden durch die Ultraschallbehandlung in der Flüssigkeit enthaltene Keime abgetötet.

Der für die Behandlung von Kühl-Schmierstoffemulsion beschriebene Ölabscheider mit Ultraschallbehandlung kann auch für die Behandlung von Entfettungsflüssigkeit verwendet werden, die nicht als Emulsion vorliegt, also beispielsweise zum Entölen von Waschlauge, die für die Oberflächenvorbehandlung von Werkstücken benutzt wurde.

Der Entölungsprozeß kann in allen Fällen dadurch verbessert werden, daß, z.B. durch eine Beheizung des Behälters, Wärmeenergie zugeführt wird.

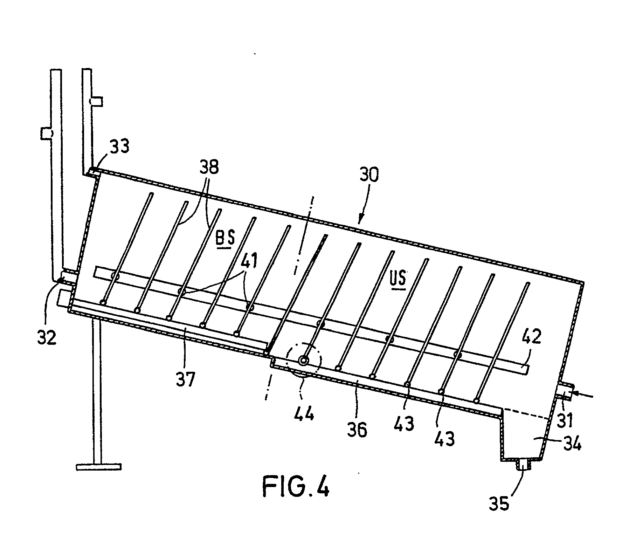

Bei dem Ausführungsbeispiel der Fign. 4 bis 6 weist der Ölabscheider ein langgestrecktes Gehäuse 30 von im wesentlichen rechteckigen Querschnitt auf, das schräggestellt werden kann, wobei der Einlaß 31 sich an dem unteren Ende und der Auslaß 32 für die vom Öl befreite Emulsion sich im unteren Bereich des oberen Endes befindet. Ein Auslaß 33 als Öl-Überlauf ist im oberen Bereich des oberen Endes des Gehäuses 30 angeordnet. Am unteren Ende des Gehäuses befindet sich ein Sumpf 34, in dem sich Feststoffschlamm ansammelt und der einen Auslaß 35 zum Abführen dieses Schlamms aufweist.

Die das Gehäuse 30 vom Einlaß 31 zum Auslaß 32 durchströmende Flüssigkeit gelangt zunächst in die Ultraschallstrecke US, in der am Gehäuseboden mindestens eine Ultraschallquelle 36 angeordnet ist, die die Flüssigkeit von unten her mit Ultraschall beaufschlagt. Die Ultraschalleinwirkung von unten hat zur Folge, daß die Tröpfchen in der Emulsion mit vertikaler Komponente angeregt werden und schneller zum Aufsteigen neigen.

In der an die Ultraschallstrecke US anschließenden Beruhigungsstrecke BS befindet sich über dem Gehäuseboden eine Heizvorrichtung 37, durch die die Öltropfenkoaleszenz nochmals unterstützt wird.

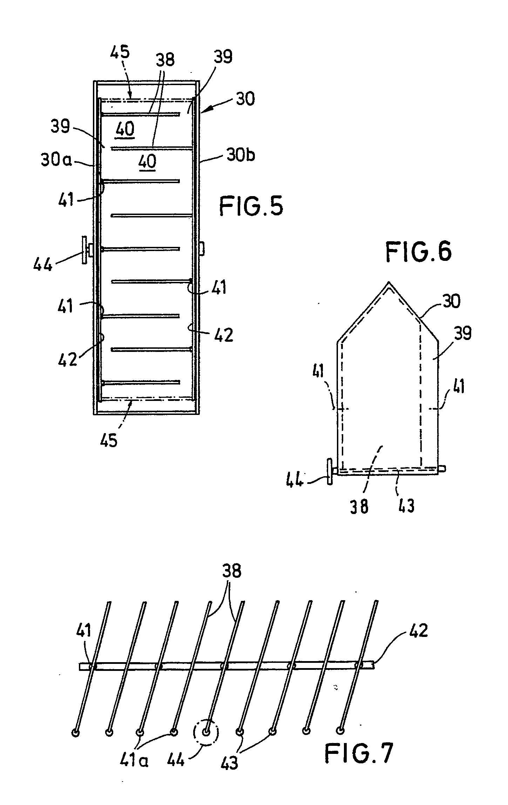

Der Ölabscheider ist als Schrägplattenabscheider ausgebildet, d.h. das Volumen des Gehäuses 30 ist durch zahlreiche quer zur Strömungsrichtung verlaufende Platten 38 unterteilt. Diese Platten sind in Bezug auf die Vertikale schräggestellt. Sie bewirken eine Verkürzung der Steigwege der Öltropfen bis zur Plattenfläche, an der sich die Tropfen aus der Dispersion abscheiden können. Gleichzeitig wird die Plattenfläche für die Tropfenkoaleszenz gegenüber einem Abscheider ohne Einbauten vergrößert. Außerdem ergeben die Platten eine definierte Strömungsführung, die einer effektiveren Ölabscheidung zuträglich ist. Wie aus Fig. 5 ersichtlich ist, reicht jede zweite Platte 38 bis an die linke seitliche Behälterwand 30a und die dazwischenliegenden Platten reichen bis an die rechte seitliche Behälterwand 30b. Durch die von den Platten freigelassenen Zwischenräume 39 entstehen Übergänge von einem Zwischenraum 40 zum benachbarten Zwischenraum 40. Die den Behälter 30 durchströmende Flüssigkeit fließt also entlang eines mäanderförmigen Weges um die Platten 38 herum. Die Platten erstrecken sich von der Nähe der Bodenwand bis unter die dachförmige Oberwand des Behälters und sind oben dachförmig zugespitzt.

Die Platten 38 verlaufen parallel zueinander und sie sind synchron im Neigungswinkel stufenlos durch den in Fig. 7 dargestellten Mechanismus verstellbar. Die Platten 38, die derselben Seitenwand des Behälters zugeordnet sind, sind jeweils über ein Gelenk 41 mit einem längslaufenden Balken 42 verbunden, der diese Platten führt. Die unteren Plattenränder sind jeweils auf einer von Längsseite zu Längsseite laufenden Achse 43 befestigt, die drehbar am Behälter gelagert ist. Die beiden Balken 42 sind über eine Querverbindung 45 miteinander starr verbunden. Durch eine Drehvorrichtung 44, z.B. ein Handrad, kann die Achse einer der Platten 38 gedreht werden, so daß der Neigungswinkel dieser Platte sich verändert. Da alle Platten 38 über den Balken 42 miteinander gekoppelt sind, verstellen sich die Platten bei Betätigung der Drehvorrichtung 44 synchron zueinander, so daß sie parallel bleiben. Auf diese Weise können durch eine Drehvorrichtung sowohl die linken als auch die rechten Platten jeweils im Neigungswinkel verstellt werden. Eine solche Neigungswinkelverstellung ist zweckmäßig, um die freie Aufstiegshöhe der Öltröpfchen in der Flüssigkeit zu verändern und eine Anpassungsfähigkeit an die im jeweiligen Medium herrschenden Bedingungen (z.B. Ölkonzentration oder Viskosität) erreichen zu können. Dieses führt zu einer größtmöglichen Effektivität bei der Behandlung. Bei starker Schrägstellung der Platten wird die freie Weglänge, über die ein Tröpfchen aufsteigen kann bevor es an eine Platte gelangt, verkürzt. Dadurch kann die Behandlungsdauer verkürzt werden, d.h. die Emulsion kann mit höherer Fließrate durch den Ölabscheider geleitet werden. Wenn ein Öltröpfchen sich an einer Platte abgesetzt hat, kann es nicht wieder von der Emulsion aufgenommen werden. Die Öltröpfchen sammeln sich an den Platten, verbinden sich zu größeren Molekülen, was den Auftrieb in vertikaler Richtung erhöht, und kriechen so langsam entlang den Platten hoch.

Beim Betrieb des Ölabscheiders wird dem Einlaß 31 die verschmutzte Emulsion zugeführt, bis sie das gesamte Behältervolumen ausfüllt. Aus dem Auslaß 32 wird jeweils die gereinigte Emulsion abgezogen, während aus dem Auslaß 33 das aufschwemmende Öl abgeführt wird. Feststoffe, die in der Emulsion enthalten sind, sinken auf der Bodenwand des Behälters ab und gelangen in den Sumpf 34.

**Patentansprüche**

1. Verfahren zur Behandlung von mit Fremdöl verunreinigten Kühl-Schmierstoffemulsionen, **dadurch gekennzeichnet,** daß die Emulsion einer Schallwellenbehandlung ausgesetzt wird und daß anschließend eine Beruhigungsphase ohne Schallwellenbehandlung durchlaufen wird.

2. Verfahren nach Anspruch 1, dadurch gekennzeichnet, daß die Schallwellenbeaufschlagung der Emulsion von unten erfolgt.

3. Vorrichtung zur Behandlung von mit Fremdöl verunreinigten Kühl-Schmierstoffemulsionen, **dadurch gekennzeichnet,** daß ein von der Emulsion durchströmter Behälter (10;30) vorgesehen ist, der eine Ultraschallstrecke (US) und daran anschließend eine Beruhigungsstrecke (BS) aufweist.

4. Vorrichtung nach Anspruch 3, dadurch gekennzeichnet, daß in der Beruhigungsstrecke (BS) eine Heizvorrichtung (37) vorgesehen ist.

5. Vorrichtung nach Anspruch 3, dadurch gekennzeichnet, daß der Behälter ein Emulsionsbehälter einer Werkzeugmaschine ist.

6. Vorrichtung nach Anspruch 3, dadurch gekennzeichnet, daß der Behälter (10;30) Bestandteil eines Ölabscheiders ist, der kontinuierlich durchströmt ist.

7. Vorrichtung nach Anspruch 6, dadurch gekennzeichnet, daß der Behälter (10) einen sich nach oben verjüngenden Dachbereich (12) mit einer Steigleitung (18) für das Fremdöl aufweist und daß unter dem Dachbereich eine Steigleitung (17) für die Emulsion angeschlossen ist.

8. Vorrichtung nach Anspruch 7, dadurch gekennzeichnet, daß die Steigleitungen (17,18) an dem einen Ende und ein Einlaß (15) an dem anderen Ende des horizontal langgestreckten Behälters (10) angeordnet sind.

9. Vorrichtung nach einem der Ansprüche 3 bis 8, dadurch gekennzeichnet, daß die Behälterbreite maximal 100 cm beträgt.

10. Vorrichtung nach einem der Ansprüche 3 bis 9, dadurch gekennzeichnet, daß die Ultraschallquelle (36) an der Bodenwand des Behälters (30) angebracht ist.

11. Vorrichtung nach einem der Ansprüche 3 bis 10, dadurch gekennzeichnet, daß in dem Behälter (30) eine Anordnung aus schrägen Platten (38) vorgesehen ist, die von der Emulsion mäanderförmig umströmt werden.

12. Vorrichtung nach Anspruch 11, dadurch gekennzeichnet, daß die Schrägstellung der Platten (38) durch eine Verstellvorrichtung (44) veränderbar ist.

13. Vorrichtung nach einem der Ansprüche 3 bis 12, dadurch gekennzeichnet, daß das Gehäuse (30) zur Ermöglichung des Absinkens von Feststoffen auf dem Gehäuseboden schräggestellt ist, wobei der Einlaß (31) sich am unteren Ende befindet.

## FIG.2

## FIG.1

FIG.3

FIG.4

FIG.5

FIG.6

FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 594 314   (BILHARTZ et al.)<br>* Spalte 1, Zeilen 13-33; spalte 3, Zeilen 36-42; Ansprüche 1,3,10 * | 1 | B 01 D 17/04<br>C 10 M 175/00 |
| Y |  | 2-4,6,8, 11 |  |
|  | — — — |  |  |
| Y | DE-C-8 868 84   (SIEMENS-SCHUCKERTWERKE AG)<br>* Seite 1, Zeile 26 - Seite 2, Zeile 52; Abbildung 2 * | 2 |  |
| A |  | 10 |  |
|  | — — — |  |  |
| Y | IBM TECHNICAL DISCLOSURE BULLETIN, Band 25, Nr. 1, Juni 1982, Seiten 192-193, New York, US; H.W. CURTIS et al.: "Ultrasonic continuous flow plasmapheresis separator"<br>* Komplettes Dokument * | 3,6,8 |  |
|  | — — — |  |  |
| A | NL-C-9 786 8   (THE BRITISH PETROLEUM CO.)<br>* Abbildungen 2,3 * | 3,6,8,10, 11 |  |
|  | — — — |  |  |
| Y | GB-A-2 356 47   (PINK)<br>* Seite 2, Zeilen 45-101; Abbildungen 1,2 * | 3,4,11,13 | RECHERCHIERTE SACHGEBIETE (Int. Cl.5) |
|  | — — — |  |  |
| X | DATENBANK WPIL, Accession Nr. 90-057751 [08], Derwent Publications Ltd, London, GB;<br>& SU-A-1 502 044 (UFA PETROLEUM INST.) 23-08-1989<br>* Komplettes Zusammenfassung * | 1 | B 01 D<br>C 10 M |
|  | — — — |  |  |
| A | IDEM | 3 |  |
|  | — — — |  |  |
| A | WO-A-8 302 240   (ECONOMICS LABORATORY)<br>* Zusammenfassung; Anspruch 1 * | 11,13 |  |
|  | — — — — — |  |  |

Der vorliegende Recherchenbericht wurde für alle Patentansprüche erstellt

| Recherchenort | Abschlußdatum der Recherche | Prüfer |
|---|---|---|
| Den Haag | 01 September 91 | MARZENKE J. |